# EUROPEAN PATENT SPECIFICATION

(11) **EP 4 196 341 B1**
(45) Date of publication and mention of the grant of the patent: **05.06.2024**
(21) Application number: 21745882.7
(22) Date of filing: 26.07.2021
(51) Int. Cl.: B29D 30/00, B65H 75/18, B65H 19/26, B65H 19/22

(54) **CONTROL OF WINDING AND CUTTING OF SHEETS OF RUBBER PRODUCTS IN A TIRE MANUFACTURING FACILITY**
STEUERUNG DES AUFROLLENS UND SCHNEIDENS VON GUMMIFOLIEN IN EINER REIFENHERSTELLUNGSANLAGE
COMMANDE D'ENROULEMENT ET DE COUPE DE FEUILLES DE PRODUITS EN CAOUTCHOUC DANS UNE INSTALLATION DE FABRICATION DE PNEUS

(30) Priority: 13.08.2020 FR 2008482
(43) Date of publication of application: 21.06.2023
(73) Proprietor: COMPAGNIE GENERALE DES ETABLISSEMENTS MICHELIN, 63000 Clermont-Ferrand (FR)
(72) Inventor: DAGON, Florent, 63040 Clermont-Ferrand Cedex 9 (FR); FRANCON, Vincent, 63040 Clermont-Ferrand Cedex 9 (FR); ROUILLE, Jacky, 63040 Clermont-Ferrand Cedex 9 (FR); TREMBLIER, Jérôme, 63040 Clermont-Ferrand Cedex 9 (FR)
(74) Representative: M.F.P. Michelin
(86) International application number: PCT/EP2021/070874
(87) International publication number: WO 2022/033856

(56) References cited:
- WO-A1-2015/050437
- WO-A1-2019/007585
- GB-A- 2 006 165

## Description

### TECHNICAL DOMAIN

The invention relates to the control of sheets of rubber products that are stored around corresponding product reels and that are adapted for continuous winding and cutting. More particularly, the invention relates to a device that performs processes for winding and cutting a sheet of rubber product, the device being part of a tire manufacturing installation.

### BACKGROUND

In tire manufacturing, winding and cutting processes are often used in the processing of sheets of rubber products (as used herein, the terms "rubber product", "product" and "rubber" are interchangeable). Solutions exist that allow for automated cutting of a sheet of rubber product. For example, the cutting device disclosed in patent FR2969133 includes winding bars arranged in parallel and a cutting system for cutting the product to a desired length. The cutting system includes a pivoting arm having a concave wall. Thus, the pivoting arm has a gooseneck shape for gripping one of the winding bars to cut the product to the desired length and initiate the winding of product onto the gripped winding bar.

The publication WO2018/122542 discloses a device for producing wound rubber sheets having means for continuously depositing an interliner on a sticky side of a rubber sheet. The continuous depositing means includes an automatic loader that is connected to means for slitting the rubber sheet and its interliner. The slitting means is connected to a winding means configured to wind each rubber sheet in the form of a disc.

The publication WO2019/007585 discloses a device for winding a rubber sheet having a pair of rotatable spools for winding the rubber sheet successively onto a first spool and then onto a second spool. The winding device also includes means for cutting the rubber sheet when the first spool is full, so as to transfer and then reattach a free end of the rubber sheet to the second spool. A swivel arm that is movable around a pivot axis and that is arranged between the reels is automatically controlled according to a transfer of a free end of the rubber sheet in order to reattach the rubber sheet to the second reel by automatic attachment means of the winding device.

Opportunities still exist to optimize production cycle time while maintaining product integrity during a tire manufacturing process. Thus, the disclosed invention provides a solution that incorporates a winding and cutting device into a tire manufacturing installation. By using the winding and cutting device of the invention, the winding and cutting processes are reliably performed without a decrease in industrial productivity. These benefits are obtained by also allowing the fast and ergonomic positioning of all types of products (including sheets with reinforcements and/or interliners) for the purpose of ergonomic use by operators that is also capable of incorporating automated functions.

### SUMMARY OF THE INVENTION

The invention relates to a winding and cutting device that controls winding and cutting of sheets of rubber product with respect to a winding reel and a product reel that are rotatable with respect to the device, the device including:
a gear system with a rotating wheel that controls a movement of the winding and product reels between a winding position, in which both reels are mounted to the device in an empty state, and a cutting position, in which the winding reel is full of a sheet wound therearound and the product reel is empty; and
a cut-off system having a motorized puller and idler that control the introduction of a sheet to the winding reel, and having a cut-off means with an elongated arm that includes an end at which one or more rotating rollers are disposed to enable contact of the sheet introduced to the winding reel;
characterized in that the device includes:
   a cutting system, including:
   - a cutting arm with a pivotally connected upper arm and forearm, the upper arm extending between a fixed end and an opposite free end that are connected by a curved portion, and the forearm extending between a fixing end wherein the free end of the upper arm is pivotally connected to the forearm, and an opposite cutting end that are connected by a concave portion, each of the curved portion and the concave portion having a geometry corresponding to a curvature of the product reel when the cutting arm is in a cutting position ;
   - and a cutting assembly installed at the cutting end of the forearm, including:
      - a curved blade for cutting the sheet when the cutting arm is in the cutting position, the blade having a handle with a butt and an opposing tang from which a curved cutting edge extends, the cutting edge extending from the tang along a curved profile to a free tip such that a predefined obtuse angle is defined between the free tip and the butt;
      - a deflector for loading the sheet during winding and cutting processes, the deflector having a substantially elastic member and being disposed adjacent to the blade;
      - a fixed anvil to which the blade and the deflector are mounted at the cutting assembly;
      - a system of rotatable rollers that work together to define the path of the sheet before and after the sheet is cut; and
      - a lever arm of predetermined length that controls the positioning of the blade and the deflector during winding and cutting processes performed by the device.

In some embodiments of the device, the rotating roller system of the cutting assembly includes:
- a rotatable application roller disposed downstream of the anvil along the path of the sheet so as to guide the sheet between the stationary anvil and the application roller; and
- three rotating shoulder rollers arranged in the shape of a triangle that maintain the position of the sheet during cutting.

In some embodiments of the device, the cutting system further includes a reinforcing flange secured to the shoulder rollers, the reinforcing flange being in the shape of a triangle corresponding to the arrangement of the shoulder rollers.

In some embodiments of the device, the lever arm moves in response to an actuator of the cutting assembly that is sized in correspondence with a predetermined length of the lever arm to define one or more gaps of adjustment relative to flanges of the product reel.

In some embodiments of the device, the cutting assembly further includes a fastening means that maintains the positioning of the blade and the deflector relative to the anvil, and a ball bearing.

In some embodiments of the device, the device further includes a cylindrical press with a pivoting arm that has an elongated member and is centered relative to a length of the winding reel to enable uniform pressure to be applied to the sheet wound therearound.

The invention also relates to a winding and cutting installation that forms part of a tire manufacturing facility, characterized in that the winding and cutting installation includes:
- at least one winding reel and at least one product reel, each of the winding reel and the product reel having a respective pair of flanges and a hub therebetween having a substantially cylindrical shape adapted to wind the sheet, both reels being rotatably mounted relative to the device; and
- at least one disclosed winding and cutting device.

In some embodiments of the installation, the installation further includes a support to which a plurality of devices are installed in uniform rows.

The invention also relates to a winding and cutting process performed by the disclosed installation during a tire manufacturing cycle performed by a tire manufacturing facility having the disclosed winding and cutting installation in place, wherein the winding reel and the product reel are in the winding position at the start of the process, the process including the following steps:
- the step of transferring the sheet to each device, during which the cut-off system introduces the sheet to the waiting winding reel;
- the step of rotating the winding reel so that the sheet can be wound around the winding reel, during which the winding and product reels remain in the winding position;
- the step of stopping the rotation of the winding reel when the desired length of the sheet is wound around the winding reel, during which the winding and product reels remain in the winding position;
- the step of moving the winding and product reels into the cutting position;
- the step of moving the cutting arm from a retracted position to a cutting position, during which the cutting arm pivots about its axis of rotation so that the curved portion of the top of the arm comes into contact with the product reel, and during which the winding and product reels remain in the cutting position;
- the step of cutting the sheet, during which the blade pivots relative to the fixed anvil to allow the sheet to be cut to the desired length, during which the deflector maintains the cut sheet in contact with the product reel, and during which the elongated arm of the cutting means remains substantially in the same plane as the cutting system to allow contact of the rotating roller(s) with the sheet to be maintained;
- the step of retracting the cutting arm from the cutting position to the retracted position, during which the winding reel winds up until a free end of the cut sheet is wound around the winding reel; and
- the step of rotating the product reel relative to the device, during which the deflector holds the cut sheet in contact with the product reel.

In some embodiments of the process, the step of retracting the cutting arm further includes the step of introducing a jet of air at the anvil.

The invention also relates to a tire manufacturing cycle including the disclosed winding and cutting process.

Other aspects of the invention will become apparent from the following detailed description.

### BRIEF DESCRIPTION OF THE DRAWINGS

The nature and various advantages of the invention will become more apparent from the following detailed description, in conjunction with the accompanying drawings, in which the same reference numerals designate identical parts throughout, and in which:
Figure 1 represents a perspective view of an embodiment of a winding and cutting installation incorporating a winding and cutting device of the invention.
Figure 2 represents a perspective view of a winding and cutting device of the invention.
Figure 3 represents the winding and cutting device of Figure 2 with winding and product reels installed.
Figure 4 represents a perspective view of a cross-section of a cylindrical press of the winding and cutting device of the invention.
Figure 5 represents a perspective view of a cutting system of the winding and cutting device of the invention.
Figure 6 represents a perspective view of a cutting assembly of the cutting system of Figure 5.
Figure 7 represents a partial perspective view of the cutting assembly of Figure 6.
Figure 8 represents a blade and deflector installed at an anvil of the cutting assembly of Figure 7.
Figure 9 represents a front view of a blade of the cutting assembly of Figures 6 through 8.
Figure 10 represents a side view of a lever arm of the cutting assembly of Figures 6 and 7 relative to a product reel installed with the winding and cutting device of the invention.
Figure 11 represents a schematic partial view of the cutting assembly during a winding and cutting process performed by the winding and cutting device of the invention.

### DETAILED DESCRIPTION

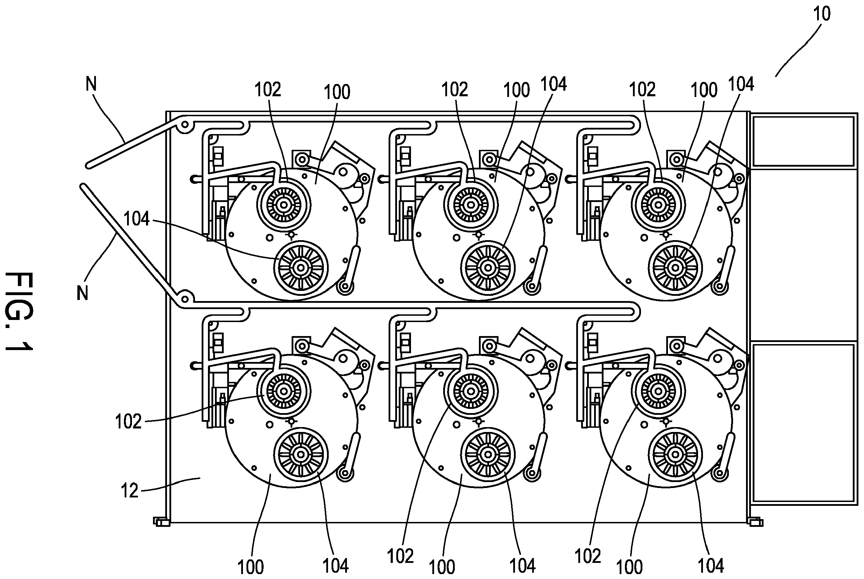

Referring now to the figures, in which the same numbers identify identical elements, Figure 1 represents a winding and cutting installation 10 that forms part of a tire manufacturing facility. The winding and cutting installation 10 incorporates at least one winding and cutting device (or "device") 100 of the invention that controls the winding and cutting of sheets of rubber products.

In the field of tires, there are various performance requirements for the tire (e.g., reduced rolling resistance, improved wear resistance, comparable wet and dry traction, sufficient mileage, etc.). Thus, as used herein, the terms "rubber sheet," "rubber product sheet," and "sheet," in the singular and plural, are used interchangeably to refer to an unvulcanized elastomeric material and also to refer to an assembly including an unvulcanized elastomeric material and an overlay (or "interliner"). The term "sheet" refers to a product that has a substantially constant thickness and is provided as an elongated element having a length greater than its width and thickness. It will be understood that the term "sheet" is interchangeable with terms such as "strip", "ply", "layer", "elongated member", "rubber sheet", "elongated rubber sheet", "rubber member", and "elongated rubber member" to refer to plies, strips, or layers of unvulcanized elastomeric material for use in tires and tire products (e.g., for inner liners, sidewalls, carcasses, treads, etc.). An unvulcanized elastomeric material that is used in the sheet may be selected from styrene-butadiene copolymer (SBR), natural rubber (NR), butadiene rubber (BR) and equivalents thereof.

The terms "sheet of rubber," "sheet of rubber product," and "sheet," in the singular and plural, are used interchangeably to also refer to reinforced rubber sheets having various types of rubber blends with wire reinforcements (as used herein, the term "wire" includes, without limitation, metallic reinforcing elements (or "reinforcements"), such as steel, synthetic, or textile wires, films, or cables). The nature of the wire and the nature of the rubber are chosen according to the desired final characteristics.

In sheets incorporating together an unvulcanized elastomeric material and an interliner, the interliner may include a collection of fibers that may be selected from textile fibers of natural origin (e.g., silk fibers, cotton fibers, bamboo fibers, cellulose, wood fibers and combinations and equivalents thereof).

By way of example, Figure 1 depicts a known configuration of the winding and cutting installation 10, which configuration includes a support 12 that holds six devices 100 in uniform rows. It is understood that the number of devices 100 may be varied depending on the tire manufacturing facility of which the winding and cutting installation 10 is a part.

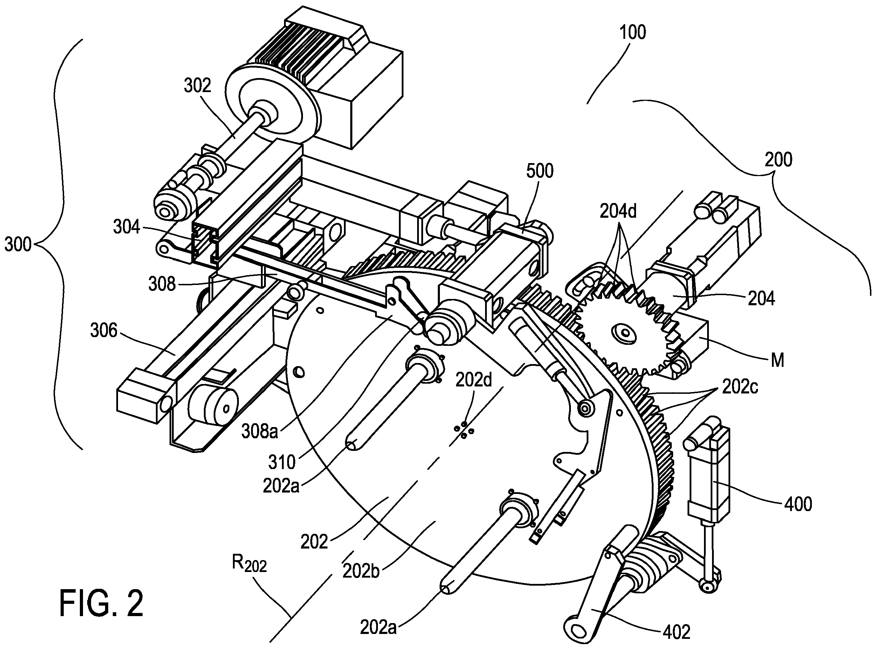

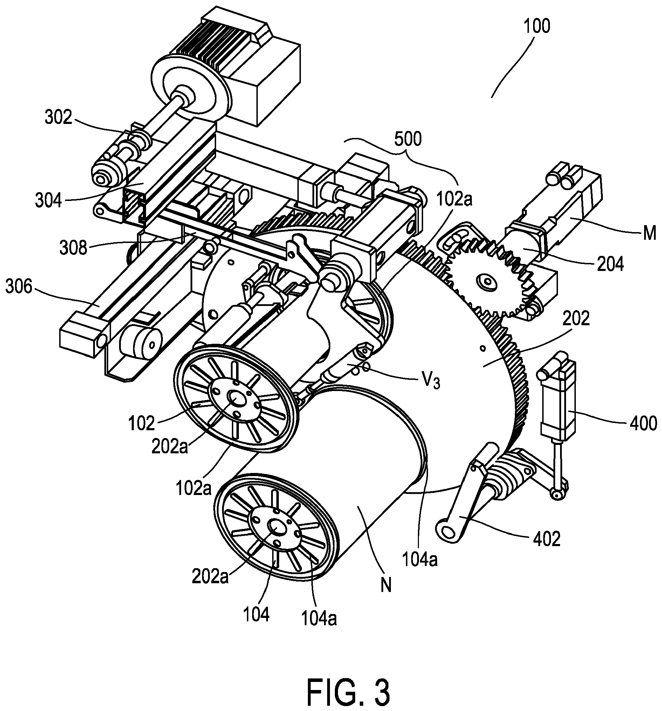

Each device 100 enables winding and cutting of a sheet N that is formed according to known processes at an installation upstream of the winding and cutting installation 10. In the configuration shown in Figure 1, the winding and cutting installation 10 can receive sheets N formed from similar or various materials (thus achieving increased productivity). Each sheet N is fed to the device 100 with respect to a winding reel 102 that is installed with the device together with a product reel 104. Each of the winding and product reels 102, 104 has a respective pair of flanges 102a, 104a with a hub defined therebetween. The winding and product reels 102, 104 are rotatable to wind the sheet N fed to the winding reel 102 by a cut-off system 300 (described with respect to Figures 2 and 3).

Referring again to Figure 1 and further to Figures 2 and 3, Figures 2 and 3 depict an embodiment of the device 100 that is used in the winding and cutting installation 10 of Figure 1. The device 100 includes a gear system 200 having a peripheral wheel (or "wheel") 202 and a pinion 204. The wheel 202 includes a pair of mandrels 202a that extend parallel to a surface 202b of the wheel, each mandrel 202a being dedicated to the installation of a reel (either the winding reel 102 or the product reel 104). During winding and cutting processes, the winding and product reels 102, 104 are subject to rotation of the wheel 202 between a winding position, in which both reels are mounted to the mandrels 202a in an empty state, and a cutting position, in which the winding reel 102 is full and the product reel 104 is empty (this position is shown in Figure 3). To achieve the cutting position from the winding position, the wheel 202 rotates so that the full winding reel 102 takes the place previously occupied by the empty product reel 104, and the empty product reel 104 takes the place previously occupied by the winding reel 102.

The wheel 202 also includes a plurality of peripheral teeth 202c that are engaged by corresponding teeth 204a of the pinion 204 during operation of the device 100. A motor M drives the pinion 204 so that it can control the speed and direction of rotation of the wheel 202. The motor M may be programmed (for example, by a programmable logic controller, or "PLC") to follow a setting of a desired winding and cutting process.

The wheel 202 is rotatable about its axis of rotation R₂₀₂, which is coaxial with a centered orifice 202d in the wheel (see Figure 2). The centered orifice 202d is disposed midway between the pair of mandrels 202a that are arranged at an equal distance from the centered orifice. The centered orifice 202d facilitates the operative installation of the device 100 at the winding and cutting installation 10 by allowing a fastening bar (not shown) of the support 12 to pass through to the centered orifice.

Referring again to Figures 1 through 3, the device 100 further includes a cut-off system 300 incorporating a motorized puller (or "puller") 302 and a deflection roller 304 that operate together to feed the sheet N in a controlled manner to the winding reel 102. The cut-off system 300 also includes a cut-off means 306 having an elongated arm 308 having an end 308a at which one or more rotating rollers 310 are disposed. The rotating roller(s) 310 allow the sheet N introduced to the winding reel 102 (and particularly in contact with a hub defined between the flanges 102a of the winding reel 102) to be contacted.

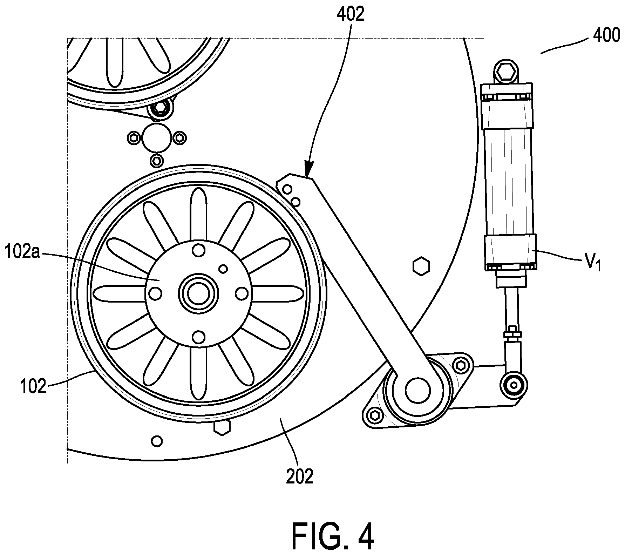

Referring again to Figures 1 through 3 and further to Figure 4, the device 100 also includes a cylindrical press 400 with a pivoting arm 402. The pivoting arm 402 includes an elongated member centered with respect to a length of the winding reel 102 (and thus with respect to a width of the sheet N). The swivel arm 402 of the cylindrical press 400 moves in response to an actuator V₁ (which may be operated by hydraulic, pneumatic or equivalent means) or equivalent actuator(s). When the latter is in the cutting position, activation of the pivoting arm 402 allows for uniform pressure to be applied to the sheet wound around the winding reel 102. The uniform pressure is reliably maintained regardless of the fill level of the winding reel 102.

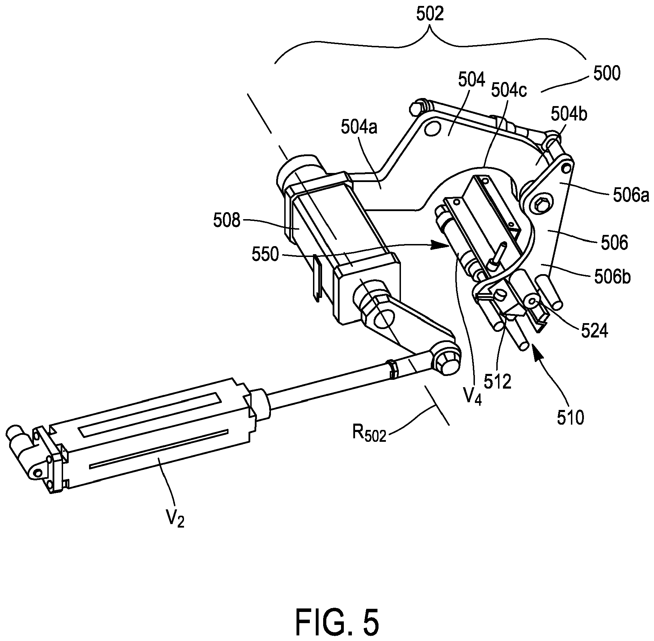

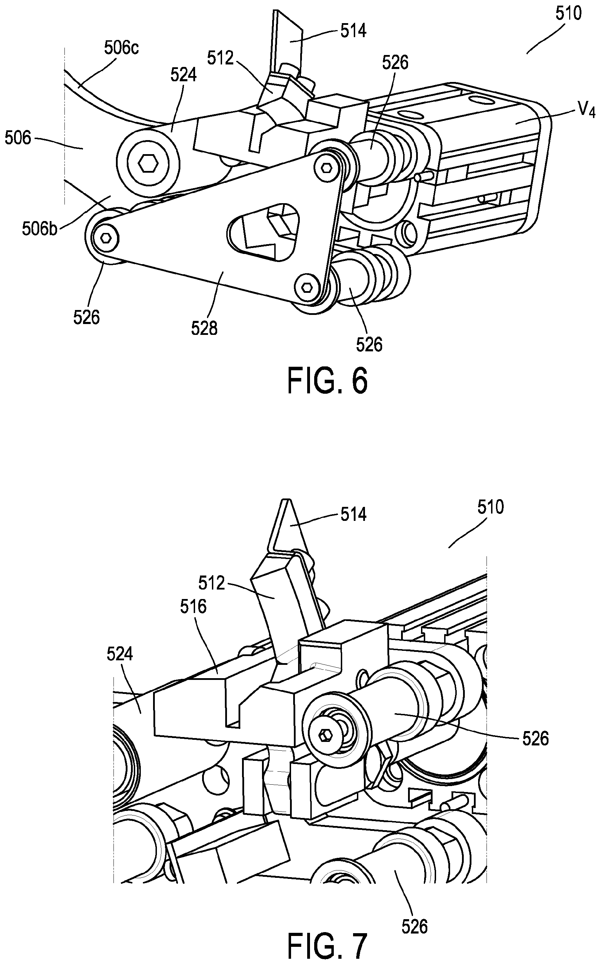

Referring again to Figures 1 to 4 and further to Figures 5 and 6, the device 100 further includes a cutting system 500 that performs a cut of the sheet N upon reaching a desired sheet length (it is well understood that a desired sheet length that is wound around the winding reel 102 corresponds to a full state of the winding reel). The cutting system 500 includes a cutting arm 502 with an upper arm 504 and a forearm 506 pivotally linked. The upper arm 504 extends between a fixed end 504a, which is pivotally connected to a housing 508 of the cutting system 500, and an opposite free end 504b. The fixed and free ends 504a, 504b of the upper arm 504 are connected by a curved portion 504c that corresponds to a curvature of the product reel 104 when the cutting arm 502 is in a cutting position (described below with respect to a winding and cutting process of the invention using the device 100). The upper arm 504 moves in response to an actuator V₂ (which may be operated by hydraulic, pneumatic or equivalent means) or equivalent actuator(s).

The forearm 506 extends between an attachment end 506a, where the free end 504b of the upper arm 504 is pivotally connected to the forearm 506, and an opposite cutting end 506b. The attachment and cutting ends 506a, 506b of the forearm 506 are connected by a concave portion 506c that conforms to the curvature of the product reel 104 when the cutting arm 502 is in a cutting position. The forearm 506 moves in response to an actuator V₃ (which may be operated by hydraulic, pneumatic or equivalent means) or equivalent actuator(s).

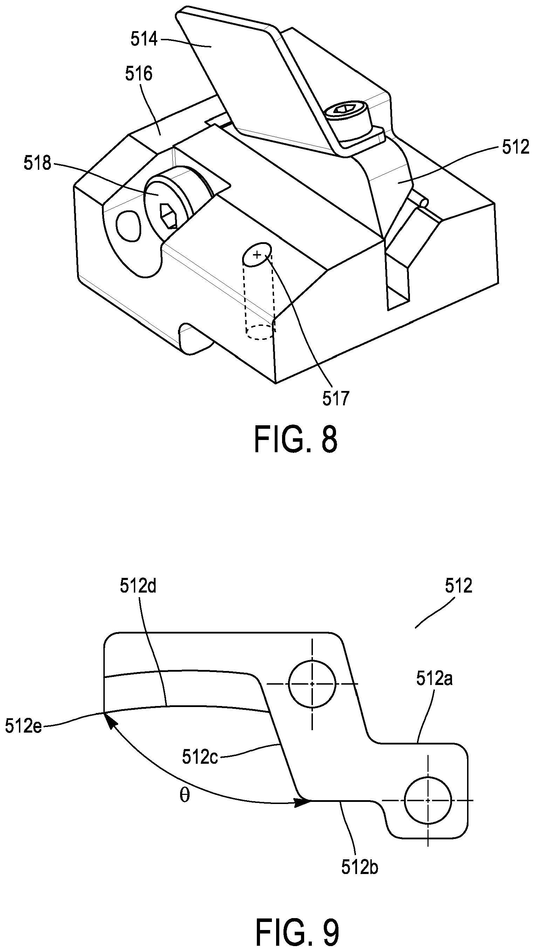

Referring again to Figures 1 to 6 and further to Figures 7 to 11, the cutting system 500 further includes a cutting assembly 510 installed at the cutting end 506b of the forearm 506. The cutting assembly 510 includes a pivoting curved blade (or "blade") 512 (see Figure 9) that cuts the sheet N when the winding reel 102 is full and in the cutting position. The cutting assembly 510 also includes a deflector 514 to accommodate all types of sheets (including thick sheets with or without reinforcements and/or interliners). The blade 512 and the deflector 514 are installed at an anvil 516 of the cutting assembly 510 by known fastening means to maintain their positioning. In the embodiment of the cutting assembly 510 shown, the blade 512 is locked on both sides by the "U" shaped anvil 516. By way of example, a representative fastening means shown in Figure 7 includes a fastening screw 518 (but one or more equivalents may be implemented as understood by the skilled person). In an embodiment of the cutting system 500, one or more means are incorporated (e.g., a ball bearing with washer(s), not shown) to achieve a reduction in cutting friction and friction between the stationary parts and the blade 512 (such friction arising from clamping the parts).

In one embodiment of the cutting assembly 510, a blast nozzle 517 is defined in the anvil 516 and is placed in communication with an air source. The blast nozzle 517 is located below the deflector 514 so that it directs a jet of air from the air source toward the sheet. The air jet lifts the sheet to be wound off the anvil 516 during the winding and cutting process of the invention.

The cutting system 500 also includes a rotating applicator roller 524 and three rotating shoulder rollers 526 that work together to define the path of the sheet N before and after the sheet cut is made. The application roller 524, which is disposed downstream of the anvil 516 along the sheet path N, supports the continuously fed sheet until the cut is taken. The positioning of the application roller 524 downstream of the anvil 516 allows the sheet path to be altered and promotes cutting by reducing resistive force.

The shoulder rollers 526, which are arranged in the shape of a triangle (see, for example, Figure 6), hold the sheet N in position during cutting. During a transition from the winding position to the cutting position, undertaken by the winding and product reels 102, 104, the shoulder rollers 526 adjust and maintain an optimized tension of the sheet N regardless of its thickness (with or without reinforcements and/or interliner). The shoulder rollers 526 are protected by a reinforcing flange 528 of the cutting assembly 510 in the shape of a triangle corresponding to the arrangement of the shoulder rollers 526. The reinforcing flange 528 is secured to the shoulder rollers 526 to maintain their geometry and thus eliminate sheet positioning issues when applying the sheet to the product reel 104.

Referring to Figure 8, the blade 512 of the cutting assembly 510 is directed to a blade having a handle 512a with a butt 512b and an opposing tang 512c from which a curved cutting edge 512d extends. The cutting edge 512d extends from the tang 512c of the handle 512a along a curved profile toward a free tip 512e such that an obtuse angle is defined between the free tip and the butt 512b. In one embodiment of the blade, the obtuse angle is approximately 135°. The inclusion of a curved blade in the cutting assembly 510 ensures a good fit of the cutting edge 512d upon contact with the sheet N. A complete cut is therefore assured regardless of the thickness of the sheet (with or without reinforcements and/or interliner).

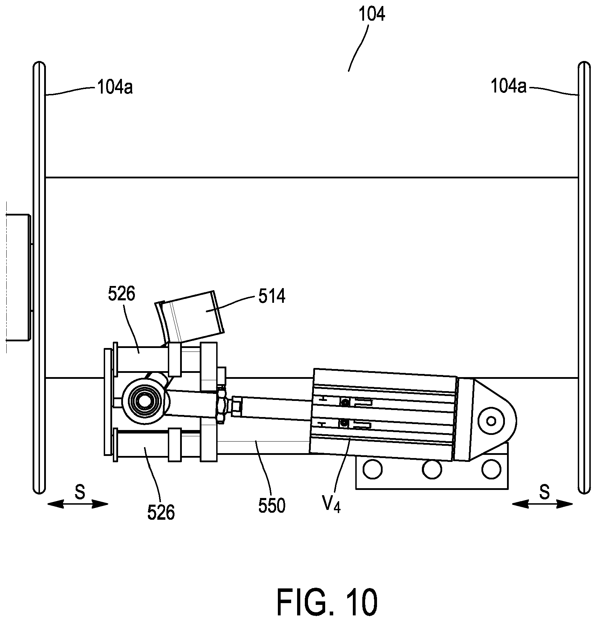

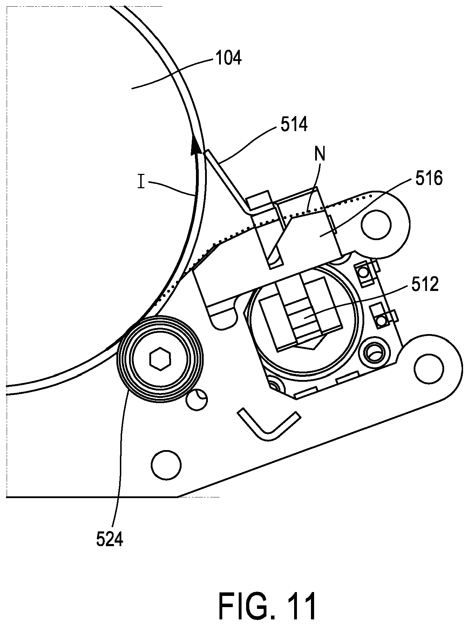

Referring to Figures 6 to 8 and further to Figures 10 and 11, the deflector 514 of the cutting assembly 510 includes a substantially elastic member that is disposed adjacent to the blade 512 so as to guide the sheet N between the anvil 516 and the application roller 524 of the cutting assembly. As the device 100 prepares the sheet N for cutting, the deflector 514 adjusts the positioning of the sheet relative to the application roller 524. When the blade 512 performs the cut of the sheet N, the deflector 514 guides the cut sheet to wrap around the product reel 104 (see arrow I in Figure 11). The deflector 514 thus ensures continuous winding of the cut sheet without deformation of the sheet wound on the winding reel 102, regardless of the thickness of the sheet (with or without reinforcements and/or interliners).

Referring again to Figures 5 and 6 and Figures 10 and 11, the cutting system 500 further includes a lever arm 550 that control the positioning of the blade 512 and the deflector 514 during winding and cutting processes performed by the device 100. The lever arm 550 moves in response to an actuator V₄ (which may be operated by hydraulic, pneumatic, or equivalent means). The actuator V₄ is sized in correspondence with a predetermined length of the lever arm 550 to allow for an adjustment gap(s) S relative to the flanges 104a of the product reel 104. Each adjustment gap S allows a sheet cutting point to be re-centered and reduces risks of mispositioning of the cut sheet when applied to the empty reel. Thus, the cylinder V₄ is well positioned in the axis of the cutting force.

Referring again to Figures 1 to 11, a detailed description is given as an example of an embodiment of a winding and cutting process of the invention. This embodiment of the winding and cutting process is performed by the winding and cutting installation 10 incorporating the device 100. Such a winding and cutting process is performed during a tire manufacturing cycle of a tire manufacturing facility in which the winding and cutting installation 10 is set up. It is understood that there are partially or fully automated modes of the winding and cutting process.

At the beginning of a winding and cutting process of the invention (or "process"), the process includes the step of transferring the sheet N to the device 100 (see Figure 1). The sheet arrives at the winding and cutting installation 10 from an installation upstream thereof. During this step, the cutting system 300 of the device 100 introduces the sheet to the winding reel 102, that, together with the product reel 104, is in the winding position.

The process further includes the step of rotating the winding reel 102 so that the sheet N can wrap around the winding reel. The rotation of the winding reel 102 continues until the desired length of the sheet is reached. During this step, the winding and product reels 102, 104 remain in the winding position. In some embodiments of the process, this step includes the step of detecting a length of the sheet wound around the winding reel 102. The detecting step may be performed by one or more known sensors.

The process further includes the step of stopping the rotation of the winding reel 102 when it is full (i.e., the desired length of the sheet is attained). In some embodiments of the process including the step of detecting the length of the wound sheet N, this step includes the step of stopping the rotation of the winding reel 102 in response to a signal that indicates reaching the desired length of the sheet. During this step, the winding and product reels 102, 104 remain in the winding position.

The process further includes the step of positioning the winding and product reels 102, 104 in the cutting position. This step includes rotating the wheel 202 to transition the winding and product reels 102, 104 from the winding position to the cutting position. During this step, the sheet N is tensioned and made available between the two reels. At the end of this step, the full winding reel 102 takes the place previously occupied by the product reel 104, and the empty product reel 104 takes the place previously occupied by the winding reel 102.

The process further includes the step of moving the cutting arm 502 from a retracted position (shown in Figure 2 by the device 100 without reels) to a cutting position (shown in Figure 3). During this step, the cutting arm 502 pivots about its axis of rotation R₅₀₂ (see Figure 5) so that the curved portion 504c of the upper arm 504 comes into contact with the empty product reel 104 (and particularly comes into contact with the hub defined between the pair of flanges 104a of such reel). The upper arm 504 pushes the sheet N and embeds it over a partial turn of the empty product reel 104 (for example, over at least a half turn of the product reel). During this step, the winding and product reels 102, 104 remain in the cutting position. The application roller 524 is used to press the sheet N onto the empty product reel 104.

The process further includes the step of cutting the sheet N that is retained on a hub surface of the product reel 104. During this step, the blade 512 pivots relative to the fixed anvil 516 in response to the action of the actuator V₄. The blade 512 allows the sheet to be cut to the desired length. During this step, the deflector 514 allows a holding application of the cut sheet on the product reel 104. Also during this step, the elongated arm 308 of the cutting means 306 remains substantially in the same plane as the cutting system 500 to allow maintenance of contact of the rotating roller(s) 310 with the sheet.

The process further includes the step of retracting the cutting arm 502 from the cutting position to the retracted position. This step is performed as soon as the cut sheet N is detected. During this step, the winding reel 102 winds until a free end of the cut sheet is wound around the winding reel. At the end of winding a free end of the cut sheet, the winding of the winding reel 102 ends. The full winding reel 102 is discharged from the device 100 (either manually by operator(s) or automatically by robot(s) that work alone and/or cobot(s) that walk together with operator(s)).

In some embodiments of the process, the step of retracting the cutting arm 502 further includes the step of introducing a jet of air at the anvil 516, this being performed by the blowing nozzle 517. The air jet loosens the sheet N to be wound from the anvil 516 and also assists in attaching the sheet to the hub of the empty product reel 104.

The process further includes the step of rotating the empty product reel 104 to complete the winding of the sheet after cutting. During this step, the deflector 514 holds the sheet in contact with the product reel 104 to ensure proper adhesion and positioning between the rubber material (including the positioning of reinforcements and/or an interliner) and the surface of the empty product reel 104 (again, see arrow I in Figure 11).

At the end of the winding and cutting process of the invention, the product reel 104 becomes the winding reel, and the discharged winding reel 102 is replaced with an empty reel that becomes the product reel 104. The device 100 is put on standby in condition to resume the winding and cutting process again, realizing a reduction in tire manufacturing cycle time.

Winding and cutting processes of the invention (and also a tire manufacturing cycle of which the processes are a part) may be PLC-controlled and may include pre-programming of control information. For example, a process setting may be defined using properties of the sheet 300 (including properties of the reinforcements and/or interliners). A process setting may be defined using parameters of the winding reel 102 and the product reel 104.
For all embodiments of the system 10, a monitoring system could be implemented. At least a portion of the monitoring system may be provided in a wearable device such as a mobile network device (e.g., a cell phone, a laptop computer, a wearable network-connected device(s) (including "augmented reality" and/or "virtual reality" devices, wearable network-connected clothing and/or any combinations and/or equivalents).

In some embodiments of the invention, the device 100 and/or the winding and cutting installation 10 (and/or a tire manufacturing facility incorporating the device 100 and/or the winding and cutting installation 10) may receive voice commands or other audio data representing, for example, the current status of a current process relative to the expected status. The response may be generated in audible, visual, tactile (e.g., using a haptic interface) and/or virtual and/or augmented form.

In some embodiments of the invention, the device 100 and/or the winding and cutting installation 10 (and/or a tire manufacturing facility incorporating the device 100 and/or the winding and cutting installation 10) may incorporate one or more sensors that obtain status data. The obtained status data may be entered into a blockchain associated with the device 100 (and/or the winding and cutting installation 10 and/or a tire manufacturing facility incorporating the device 100 and/or the winding and cutting installation 10).

In an embodiment, a winding and cutting process may include a step of causing the device 100 and/or the winding and cutting installation 10 (or causing a tire manufacturing facility incorporating the device 100 and/or the winding and cutting installation 10) to recognize characteristics representative of the sheet N (including reinforcements and/or an interliner incorporated with the sheet) (e.g., values of length and width and tensile strength) and to compare them with expected values. This step may include a step of training the device 100 and/or the winding and cutting installation 10 (or training a tire manufacturing facility that incorporates the device 100 and/or the winding and cutting installation 10) to recognize non-equivalences between the compared values. Each training step includes a classification generated by self-learning means. This classification may include, but is not limited to, parameters of the sheet materials used (including parameters of the reinforcement materials and/or an interliner used in the sheet), durations of winding and cutting cycles, and expected values at the end of a current tire manufacturing cycle (e.g., the value of an amount of rubbery material recovered from full applicator reels during a cycle).

The terms "at least one" and "one or more" are used interchangeably. Ranges that are presented as being "between a and b" include both "a" and "b" values.

Although particular embodiments of the disclosed apparatus have been illustrated and described, it will be understood that various changes, additions, and modifications may be practiced without departing from the scope of this disclosure. Accordingly, no limitations should be imposed on the scope of the described invention except those set forth in the appended claims.

## Claims

1. A winding and cutting device (100) that controls winding and cutting of sheets of rubber products with respect to a winding reel (102) and a product reel (104) that are rotatable relative to the device (100), the device (100) comprising:
a gear system (200) with a rotatable wheel (202) that controls a movement of the winding and product reels (102, 104) between a winding position, in which both reels are mounted to the device (100) in an empty state, and a cutting position, in which the winding reel (102) is full of a sheet (N) wound thereon and the product reel (104) is empty; and
a cut-off system (300) having a motorized extractor (302) and a deflection roller (304) that control the introduction of a sheet (N) to the winding reel (102), and having a cut-off means (306) with an elongated arm (308) that includes an end (308a) at which one or more rotatable rollers (310) are disposed to enable contact of the sheet introduced to the winding reel (102);
wherein the device (100) comprises:
a cutting system (500), **characterised by** comprising
- a cutting arm (502) with an upper arm (504) and a forearm (506) pivotally linked, the upper arm (504) extending between a fixed end (504a) and an opposite free end (504b) that are linked by a bent portion (504c), and the forearm (506) extending between a fixing end (506a), wherein the free end (504b) of the upper arm (504) is pivotally connected to the forearm (506), and an opposite cutting end (506b) that are connected by a concave portion (506c), each of the curved portion (504c) and the concave portion (506c) having a geometry corresponding to a curvature of the product reel (104) when the cutting arm (502) is in a cutting position;
- and a cutting assembly (510) installed at the cutting end (506b) of the forearm (506), comprising:
- a blade (512) bent to cut the sheet (N) when the cutting arm (502) is in the cutting position, the blade (512) having a handle (512a) with a butt (512b) and an opposite tang (512c) from which a bent cutting edge (512d) extends, the cutting edge (512d) extending from the tang (512c) along a curved profile to a free tip (512e) such that a predefined obtuse angle (θ) is defined between the free tip (512e) and the butt (512b)
- a deflector (514) for loading the sheet during winding and cutting processes, the deflector (514) comprising a substantially elastic member and being disposed adjacent the blade (512);
- a stationary anvil (516) to which the blade (512) and the deflector (514) are mounted at the cutting assembly (510)
- a system of rotating rollers that work together to define the path of the sheet (N) before and after the sheet cut is made; and
- a lever arm (550) of predetermined length that controls the positioning of the blade (512) and the deflector (514) during winding and cutting processes performed by the device (100).

2. The device (100) of claim 1, wherein the rotating roller system of the cutting assembly (510) comprises:
- a rotatable application roller (524) disposed downstream of the anvil (516) along the path of the sheet (N) so as to guide the sheet between the stationary anvil (516) and the application roller (524); and
- three rotatable shoulder rollers (526) arranged in the shape of a triangle that maintain the position of the sheet during cutting.

3. The device (100) of claim 2, wherein the cutting system (500) further comprises a reinforcing flange (528) secured to the shoulder rollers (526), the reinforcing flange being triangular in shape corresponding to the arrangement of the shoulder rollers (526).

4. The device (100) of any one of claims 1 to 3, wherein the lever arm (550) moves in response to an actuator (V₄) of the cutting assembly (510) that is sized in correspondence with a predetermined length of the lever arm (550) to define adjustment gap(s) (S) with respect to flanges (104a) of the product reel (104).

5. The device (100) of any one of claims 1 to 4, wherein the cutting assembly (510) further comprises a fastening means that maintains the positioning of the blade (512) and the deflector (514) relative to the anvil (516), and a ball bearing (520).

6. The device (100) of any one of claims 1 to 5, further comprising a cylindrical press (400) with a pivot arm (402) that includes an elongated member and centered relative to a length of the winding reel (102) to enable application of uniform pressure to the sheet (N) wound therearound.

7. A winding and cutting installation (10) that forms part of a tire manufacturing facility, **characterized in that** the winding and cutting plant comprises:
at least one winding reel (102) and at least one product reel (104), each winding reel and each product reel having a respective pair of flanges (102a, 104a) and a hub therebetween comprising a substantially cylindrical shape adapted to wind the sheet (N), both reels being rotatably mounted relative to the device (100); and
at least one winding and cutting device (100) according to any of claims 1 to 6.

8. The winding and cutting installation (10) of claim 7, further comprising a support (12) to which a plurality of devices (100) are installed in uniform rows.

9. A winding and cutting process performed by the installation (10) of claim 7 or claim 8 during a tire manufacturing cycle performed by a tire manufacturing facility with the winding and cutting installation (10) in place, wherein the winding reel (102) and the product reel (104) are in the winding position at the beginning of the process, the process comprising the following steps:
the step of transferring the sheet (N) to each device (100), during which the cut-off system (300) introduces the sheet to the waiting winding reel (102);
the step of rotating the winding reel (102) so that the sheet can be wound around the winding reel, during which the winding and product reels (102), (104) remain in the winding position;
the step of stopping the rotation of the winding reel (102) when the desired length of the sheet (N) is wound around the winding reel (102), during which the winding and product reels (102), (104) remain in the winding position; and
the step of moving the winding and product reels (102), (104) into the cutting position;
the step of moving the cutting arm (502) from a retracted position to a cutting position, during which the cutting arm (502) pivots about its axis of rotation (R₅₀₂) so that the curved portion (504c) of the upper arm (504) comes into contact with the product reel (104), and during which the winding and product reels (102), (104) remain in the cutting position;
the step of cutting the sheet (N), during which the blade (512) pivots relative to the stationary anvil (516) to allow the sheet to be cut to the desired length, during which the deflector (514) holds the cut sheet in contact with the product reel (104) and during which the elongated arm (308) of the cutting means (306) remains substantially in the same plane as the cutting system (500) to allow contact of the rotating roller(s) (310) with the sheet to be maintained;
the step of retracting the cutting arm (502) from the cutting position to the retracted position, during which the winding reel (102) winds until a free end of the cut sheet (N) is wound around the winding reel; and
the step of rotating the product reel (104) relative to the device (100), during which the deflector (514) maintains the cut sheet in contact with the product reel (104).

10. The process of claim 9, wherein the step of retracting the cutting arm (502) further comprises the step of introducing a jet of air at the anvil (516).

11. A tire manufacturing cycle comprising the winding and cutting process of claim 9 or claim 10.

## Patentansprüche

1. Aufroll- und Schneidevorrichtung (100), die das Aufrollen und Schneiden von Bahnen aus Gummiprodukten bezüglich einer Aufrollspule (102) und einer Produktspule (104), die in Bezug zur Vorrichtung (100) drehbar sind, steuert, wobei die Vorrichtung (100) Folgendes umfasst:
ein Getriebesystem (200) mit einem drehbaren Rad (202), das eine Bewegung der Aufroll- und Produktspule (102, 104) zwischen einer Aufrollposition, in der beide Spulen im leeren Zustand an der Vorrichtung (100) montiert sind, und einer Schneideposition, in der die Aufrollspule (102) mit einer darauf aufgerollten Bahn (N) gefüllt ist und die Produktspule (104) leer ist, steuert; und
ein Zuschneidesystem (300) mit einem motorisierten Abzieher (302) und einer Ablenkrolle (304), die das Einleiten einer Bahn (N) auf der Aufrollspule (102) steuern, und mit einer Zuschneideeinrichtung (306) mit einem länglichen Arm (308), der ein Ende (308a) umfasst, an dem eine oder mehrere drehbare Rollen (310) angeordnet sind, um den Kontakt der auf die Aufrollspule (102) eingeleiteten Bahn zu ermöglichen;
wobei die Vorrichtung (100) Folgendes umfasst:
ein Schneidesystem (500), **dadurch gekennzeichnet, dass** es Folgendes umfasst:
- einen Schneidarm (502) mit einem verschwenkbar verbundenen Oberarm (504) und Unterarm (506), wobei sich der Oberarm (504) zwischen einem fixierten Ende (504a) und einem entgegengesetzten freien Ende (504b), die durch einen gekrümmten Abschnitt (504c) verbunden sind, erstreckt, und sich der Unterarm (506) zwischen einem fixierten Ende (506a), wobei das freie Ende (504b) des Oberarms (504) verschwenkbar mit dem Unterarm (506) verbunden ist, und einem entgegengesetzten Schneidende (506b) erstreckt, die durch einen konkaven Abschnitt (506c) verbunden sind, wobei der gekrümmte Abschnitt (504c) und der konkave Abschnitt (506c) jeweils eine Form aufweisen, die der Krümmung der Produktspule (104) entspricht, wenn sich der Schneidarm (502) in einer Schneideposition befindet;
- und eine Schneideanordnung (510), die am Schneidende (506b) des Unterarms (506) montiert ist, Folgendes umfassend:
- ein Messer (512), das gekrümmt ist, um die Bahn (N) zu schneiden, wenn sich der Schneidarm (502) in der Schneideposition befindet, wobei das Messer (512) einen Griff (512a) mit einem Stiel (512b) und einer entgegengesetzten Angel (512c), von der sich eine gekrümmte Schneidkante (512d) erstreckt, aufweist, wobei sich die Schneidkante (512d) von der Angel (512c) derart entlang eines gekrümmten Profils zu einer freien Spitze (512e) erstreckt, dass ein festgelegter stumpfer Winkel (θ) zwischen der freien Spitze (512e) und dem Stiel (512b) definiert ist;
- eine Ablenkplatte (514) zum Beladen der Bahn während des Aufroll- und Schneidevorgangs, wobei die Ablenkplatte (514) ein im Wesentlichen elastisches Element umfasst und an das Messer (512) angrenzend angeordnet ist;
- einen stationären Amboss (516), an dem das Messer (512) und die Ablenkplatte (514) an der Schneideanordnung (510) montiert sind;
- ein System aus sich drehenden Rollen, die zusammenwirken, um einen Weg der Bahn (N) vor und nach dem Bahnschnitt zu definieren; und
- einen Hebelarm (550) mit einer festgelegten Länge, der die Positionierung des Messers (512) und der Ablenkplatte (514) während des von der Vorrichtung (100) durchgeführten Aufroll- und Schneidevorgangs steuert.

2. Vorrichtung (100) nach Anspruch 1, wobei das sich drehende Rollensystem der Schneideanordnung (510) Folgendes umfasst:
- eine drehbare Auftragerolle (524), die entlang des Weges der Bahn (N) dem Amboss (516) nachgelagert angeordnet ist, um die Bahn zwischen dem stationären Amboss (516) und der Auftragerolle (524) zu führen; und
- drei drehbare Schulterrollen (526), die dreieckig angeordnet sind, die die Position der Bahn beim Schneiden halten.

3. Vorrichtung (100) nach Anspruch 2, wobei das Schneidesystem (500) ferner einen Verstärkungsflansch (528) umfasst, der an den Schulterrollen (526) fixiert ist, wobei der Verstärkungsflansch passend zur Anordnung der Schulterrollen (526) dreieckig ist.

4. Vorrichtung (100) nach einem der Ansprüche 1 bis 3, wobei sich der Hebelarm (550) in Bezug zu einem Stellglied (V₄) der Schneideanordnung (510) bewegt, das entsprechend einer festgelegten Länge des Hebelarms (550) dimensioniert ist, um in Bezug zu den Flanschen (104a) der Produktspule (104) einen oder mehrere Stellspalt(e) zu definieren.

5. Vorrichtung (100) nach einem der Ansprüche 1 bis 4, wobei die Schneideanordnung (510) ferner eine Befestigungseinrichtung, welche die Positionierung des Messers (512) und der Ablenkplatte (514) in Bezug zum Amboss (516) hält, und ein Kugellager (520) umfasst.

6. Vorrichtung (100) nach einem der Ansprüche 1 bis 5, ferner umfassend eine zylindrische Presse (400) mit einem Schwenkarm (402), der ein längliches Element umfasst und bezüglich einer Länge der Aufrollspule (102) zentriert ist, um das Aufbringen eines gleichförmigen Drucks auf die darum aufgerollte Bahn (N) zu gewährleisten.

7. Aufroll- und Schneideeinrichtung (10), die Teil einer Reifenherstellungsanlage ist, **dadurch gekennzeichnet, dass** die Aufroll- und Schneideanlage Folgendes umfasst:
mindestens eine Aufrollspule (102) und mindestens eine Produktspule (104), wobei jede Aufrollspule und jede Produktspule ein jeweiliges Paar Flansche (102a, 104a) und eine Nabe dazwischen, die eine im Wesentlichen zylindrische Form umfasst, die dazu eingerichtet ist, die Bahn (N) aufzurollen, aufweist, wobei beide Spulen in Bezug zur Vorrichtung (100) drehbar montiert sind; und
mindestens eine Aufroll- und Schneidevorrichtung (100) nach einem der Ansprüche 1 bis 6.

8. Aufroll- und Schneideeinrichtung (10) nach Anspruch 7, ferner umfassend eine Stütze (12), an der mehrere Vorrichtungen (100) in gleichförmigen Reihen angeordnet sind.

9. Aufroll- und Schneidevorgang, der von der Einrichtung (10) nach Anspruch 7 oder Anspruch 8 während eines von einer mit der Aufroll- und Schneideeinrichtung (10) versehenen Reifenherstellungsanlage durchgeführten Reifenherstellungszyklus durchgeführt wird, wobei sich die Aufrollspule (102) und die Produktspule (104) zu Beginn des Vorgangs in der Aufrollposition befinden, wobei der Vorgang die folgenden Schritte umfasst:
den Schritt des Übertragens der Bahn (N) auf jede Vorrichtung (100), während dessen das Zuschneidesystem (300) die Bahn auf die wartende Aufrollspule (102) einleitet;
den Schritt des Drehens der Aufrollspule (102), sodass die Bahn um die Aufrollspule aufgerollt werden kann, während dessen die Aufroll- und Produktspule (102), (104) in der Aufrollposition bleiben;
den Schritt des Stoppens der Drehung der Aufrollspule (102), wenn die gewünschte Länge der Bahn (N) um die Aufrollspule (102) aufgerollt ist, während dessen die Aufroll- und Produktspule (102), (104) in der Aufrollposition bleiben; und
den Schritt des Bewegens der Aufroll- und Produktspule (102), (104) in die Schneideposition;
den Schritt des Bewegens des Schneidarms (502) von einer eingezogenen Position in eine Schneideposition, während dessen sich der Schneidarm (502) um seine Drehachse (R₅₀₂) verschwenkt, sodass der gekrümmte Abschnitt (504c) des Oberarms (504) die Produktspule (104) berührt, und während dessen die Aufroll- und Produktspule (102), (104) in der Schneideposition bleiben;
den Schritt des Schneidens der Bahn (N), während dessen sich das Messer (512) in Bezug zum stationären Amboss (516) verschwenkt, um zuzulassen, dass die Bahn auf die gewünschte Länge geschnitten wird, während dessen die Ablenkplatte (514) die geschnittene Bahn mit der Produktspule (104) in Kontakt hält und während dessen der längliche Arm (308) der Schneideeinrichtung (306) im Wesentlichen in derselben Ebene wie das Schneidesystem (500) bleibt, um den Kontakt der sich drehenden Rolle(n) (310) mit der Bahn zu halten;
den Schritt des Einziehens des Schneidarms (502) aus der Schneideposition in die eingezogene Position, während dessen sich die Aufrollspule (102) dreht, bis ein freies Ende der zugeschnittenen Bahn (N) um die Aufrollspule aufgerollt ist; und
den Schritt des Drehens der Produktspule (104) in Bezug zur Vorrichtung (100), während dessen die Ablenkplatte (514) die zugeschnittene Bahn mit der Produktspule (104) in Kontakt hält.

10. Vorgang nach Anspruch 9, wobei der Schritt des Einziehens des Schneidarms (502) ferner den Schritt des Einleitens eines Luftstrahls am Amboss (516) umfasst.

11. Reifenherstellungszyklus, umfassend den Aufroll- und Schneidevorgang nach Anspruch 9 oder Anspruch 10.

## Revendications

1. Dispositif (100) d'enroulage et de coupe qui réalise la gestion d'enroulage et de coupe des nappes de produits caoutchouteux par rapport à une bobine d'enroulement (102) et une bobine de produit (104) qui sont mobiles en rotation par rapport au dispositif (100), le dispositif (100) comprenant :
un système d'engrenage (200) avec une roue (202) rotative qui gère un déplacement des bobines d'enroulement et de produit (102, 104) entre une position d'enroulage, dans laquelle les deux bobines sont montées au dispositif (100) dans un état vide, et une position de coupe, dans laquelle la bobine d'enroulement (102) est pleine d'une nappe (N) enroulée autour de celle-ci et la bobine de produit (104) est vide ; et
un système de tronçonnage (300) ayant un extracteur motorisé (302) et un galet de renvoi (304) qui gèrent l'introduction d'une nappe (N) à la bobine d'enroulement (102), et ayant un moyen de tronçonnage (306) avec un bras allongé (308) qui inclut une extrémité (308a) à laquelle un ou des galets rotatifs (310) sont disposés pour permettre de mettre en contact la nappe introduite à la bobine d'enroulement (102);
dans lequel le dispositif (100) comprend :
un système de coupe (500), comprenant :
- un bras de coupe (502) avec un haut du bras (504) et un avant-bras (506) liés de manière pivotante, le haut du bras (504) s'étendant entre une extrémité fixée (504a) et une extrémité libre (504b) opposée qui sont liées par une partie courbée (504c), et l'avant-bras (506) s'étendant entre une extrémité de fixation (506a), où l'extrémité libre (504b) du haut du bras (504) est reliée de manière pivotante à l'avant-bras (506), et une extrémité de coupe (506b) opposée qui sont liées par une partie concave (506c), chacune de la partie courbée (504c) et la partie concave (506c) ayant une géométrie correspondante à une courbure de la bobine de produit (104) lorsque le bras de coupe (502) est dans une position de coupe ;
- et un montage de coupe (510) installé à l'extrémité de coupe (506b) de l'avant-bras (506), comprenant :
- une lame (512) cintrée pour couper la nappe (N) lorsque le bras de coupe (502) est dans la position de coupe, la lame (512) ayant un guidon (512a) avec une crosse (512b) et une soie (512c) opposée de laquelle un tranchant (512d) cintré s'étend, le tranchant (512d) s'étendant de la soie (512c) le long d'un profil courbé vers une pointe (512e) libre de sorte qu'un angle obtus (θ) prédéfini est défini entre la pointe (512e) libre et la crosse (512b);
- un déflecteur (514) permettant d'embarrer la nappe pendant des procédés d'enroulage et de coupe, le déflecteur (514) comprenant un membre sensiblement élastique et étant disposé à côté de la lame (512) ;
- une enclume (516) fixe à laquelle la lame (512) et le déflecteur (514) sont installés au montage de coupe (510);
- un système de galets rotatifs qui fonctionnent ensemble afin de définir le trajet de la nappe (N) avant et après la réalisation de la coupe de la nappe ; et
- un bras levier (550) d'une longueur prédéterminée qui gère le positionnement de la lame (512) et du déflecteur (514) pendant des procédés d'enroulage et de coupe réalisés par le dispositif (100).

2. Dispositif (100) de la revendication 1, dans lequel le système de galets rotatifs du montage de coupe (510) comprend :
- un galet d'application (524) rotatif disposé en aval de l'enclume (516) le long du trajet de la nappe (N) de manière de guider la nappe entre l'enclume (516) fixe et le galet d'application (524) ; et
- trois galets épaulés (526) rotatifs arrangés en forme d'un triangle qui maintiennent la position de la nappe pendant la coupe.

3. Dispositif (100) de la revendication 2, dans lequel le système de coupe (500) comprend en outre un flasque renfort (528) sécurisé aux galets épaulés (526), le flasque renfort étant en forme d'un triangle correspondant à l'arrangement des galets épaulés (526).

4. Dispositif (100) de l'une quelconque des revendications 1 à 3, dans lequel le bras levier (550) se déplace en réponse à un vérin (V₄) du montage de coupe (510) qui est dimensionné en correspondance avec une longueur prédéterminée du bras levier (550) pour définir un ou des espaces d'ajustement (S) par rapport à des flasques (104a) de la bobine de produit (104).

5. Dispositif (100) de l'une quelconque des revendications 1 à 4, dans lequel le montage de coupe (510) comprend en outre un moyen de fixation qui maintient le positionnement de la lame (512) et le déflecteur (514) par rapport à l'enclume (516), et une butée à bille (520).

6. Dispositif (100) de l'une quelconque des revendications 1 à 5, comprenant en outre un cylindre presseur (400) avec un bras pivotant (402) qui comporte un membre allongé et centré par rapport à une longueur de la bobine d'enroulement (102) pour permettre une application d'une pression uniforme à la nappe (N) enroulée autour de celle-ci.

7. Installation d'enroulage et de coupe (10) qui fait partie d'une installation de fabrication des pneumatiques, **caractérisé en ce que** l'installation d'enroulage et de coupe comprend :
au moins une bobine d'enroulement (102) et au moins une bobine de produit (104), chaque bobine d'enroulement et chaque bobine de produit ayant une paire de flasques respective (102a, 104a) et un moyeu entre eux comprenant une forme sensiblement cylindrique adaptée pour enrouler la nappe (N), les deux bobines étant montées mobiles en rotation par rapport au dispositif (100) ; et
au moins un dispositif (100) d'enroulage et de coupe selon l'une quelconque des revendications 1 à 6.

8. Installation d'enroulage et de coupe (10) de la revendication 7, comprenant en outre un support (12) auquel une pluralité de dispositifs (100) est installée en rangées uniformes.

9. Procédé d'enroulage et de coupe réalisé par l'installation (10) de la revendication 7 ou de la revendication 8 pendant un cycle de fabrication des pneumatiques réalisé par une installation de fabrication des pneumatiques dont l'installation d'enroulage et de coupe (10) est mise en place, dans lequel la bobine d'enroulement (102) et la bobine de produit (104) sont dans la position d'enroulage au début du procédé, le procédé comprenant les étapes suivantes :
l'étape de transfert de la nappe (N) à chaque dispositif (100), pendant laquelle le système de tronçonnage (300) introduit la nappe à la bobine d'enroulement (102) en attente; l'étape de mise en rotation de la bobine d'enroulement (102) pour que la nappe puisse s'enrouler autour de la bobine d'enroulement, pendant laquelle les bobines d'enroulement et de produit (102), (104) restent dans la position d'enroulage ;
l'étape d'arrêt de la rotation de la bobine d'enroulement (102) lorsque la longueur souhaitée de la nappe (N) est enroulée autour de la bobine d'enroulement (102), pendant laquelle les bobines d'application et de produit (102), (104) restent dans la position d'enroulage ;
l'étape de mise en place les bobines d'application et de produit (102), (104) dans la position de coupe;
l'étape d'amener le bras de coupe (502) d'une position escamotée vers une position de coupe, pendant laquelle le bras de coupe (502) pivote autour de son axe de rotation (R₅₀₂) de sorte que la partie courbée (504c) du haut du bras (504) vient au contact à la bobine de produit (104), et pendant laquelle les bobines d'application et de produit (102), (104) restent dans la position de coupe ;
l'étape de coupe de la nappe (N), pendant laquelle la lame (512) pivote par rapport à l'enclume (516) fixe pour permettre de couper la nappe à la longueur souhaitée, pendant laquelle le déflecteur (514) maintient la nappe coupée en contact avec la bobine de produit (104), et pendant laquelle le bras allongé (308) du moyen de tronçonnage (306) reste sensiblement dans le même plan que le système de coupe (500) pour permettre le maintien d'un contact du ou des galets rotatifs (310) avec la nappe ;
l'étape de rétraction du bras de coupe (502) de la position de coupe vers la position escamotée, pendant laquelle la bobine d'enroulement (102) s'enroule jusqu'à ce qu'une extrémité libre de la nappe (N) coupée soit enroulée autour de la bobine d'enroulement ; et
l'étape de mise en rotation la bobine de produit (104) par rapport au dispositif (100), pendant laquelle le déflecteur (514) maintient la nappe coupée en contact avec la bobine de produit (104).

10. Procédé de la revendication 9, dans lequel l'étape de rétraction du bras de coupe (502) comprend en outre l'étape d'introduction d'un jet d'air au niveau de l'enclume (516).

11. Un cycle de fabrication des pneumatiques comprenant le procédé d'enroulage et de coupe de la revendication 9 ou de la revendication 10.
